# EUROPÄISCHE PATENTSCHRIFT

(11) **EP 3 630 581 B1**
(45) Veröffentlichungstag und Bekanntmachung des Hinweises auf die Patenterteilung: **23.03.2022**
(21) Anmeldenummer: 18722438.1
(22) Anmeldetag: 26.04.2018
(51) Int. Cl.: B62D 15/02

(54) **VERFAHREN UND ANORDNUNG ZUR PLAUSIBILISIERUNG UND/ODER (RE-) INITIALISIERUNG EINER HINTERRADLENKUNG**
METHOD AND ASSEMBLY FOR VALIDITY-CHECKING AND/OR (RE)INITIALISING REAR WHEEL STEERING
PROCÉDÉ ET AGENCEMENT D'ANALYSE DE PLAUSIBILITÉ ET/OU DE (RÉ)INITIALISATION D'UNE DIRECTION DE ROUE ARRIÈRE

(30) Priorität: 31.05.2017 DE 102017209231
(43) Veröffentlichungstag der Anmeldung: 08.04.2020
(73) Patentinhaber: ZF Friedrichshafen AG, 88046 Friedrichshafen (DE)
(72) Erfinder: EILERS, Hubertus, 49176 Hilter a.T.W. (DE); BEERING, Ulf, 49328 Melle (DE); VOGT, Dominik, 88074 Meckenbeuren (DE)
(74) Vertreter: ZF Friedrichshafen AG
(86) Internationale Anmeldenummer: PCT/EP2018/060768
(87) Internationale Veröffentlichungsnummer: WO 2018/219562

(56) Entgegenhaltungen:
- EP-A1- 1 486 399
- EP-A2- 1 010 577
- DE-A1-102008 032 046

## Beschreibung

Die vorliegende Erfindung betrifft ein Verfahren sowie eine Anordnung zur Plausibilisierung und/oder (Re-) Initialisierung einer Hinterradlenkung eines Fahrzeugs gemäß der in den Oberbegriffen der unabhängigen Ansprüche näher definierten Art.

Aus dem Stand der Technik sind Hinterradlenkungen für Fahrzeuge bekannt, die einen Hinterradaktuator zum Einstellen eines Hinterradlenkwinkels aufweisen. Zum Erfassen der Stellposition des Hinterradaktuators weisen derartige Hinterradlenkungen einen Sensor auf, der in dem Hinterradaktuator angeordnet sein kann. Um die ordnungsgemäße Arbeitsweise des Sensors überprüfen zu können, weisen aus dem Stand der Technik bekannte Hinterradlenkungen zusätzlich einen Absolutsensor auf. Derartige Absolutsensoren werden demnach dafür verwendet, um redundant den Hinterradlenkwinkel bzw. die Verstellung des Hinterradaktuators zu messen, um hierüber die ordnungsgemäße Funktionsweise des Sensors im Rahmen einer Plausibilisierung zu überprüfen. Ferner werden derartige Absolutsensoren zur (Re-) Initialisierung der Hinterradlenkung verwendet (Nulllage oder Startwert anfahren). Als Sensoren werden Rotorlagesensoren verwendet, die die Lage eines Rotors des Hinterradaktuators im Bereich von 360° erfassen können. Die vom Rotor durchgeführten Umdrehungen und/oder die Umdrehungsrichtung sind nach dem Initialisieren in einem Speicher der Hinterradlenkung abgespeichert. Im unbestromten Zustand z.B. aufgrund eines Abstellens des Fahrzeugs gehen diese Informationen verloren, so dass die absolute Lage des Hinterradaktuators nicht mehr bekannt ist. Zur Reinitialisierung wird deshalb der Absolutsensor verwendet, mittels dem die Nulllage des Hinterradaktuators reinitialisiert werden kann. Eine solche Anordnung und ein entsprechendes Verfahren ist zum Beispiel aus der DE10 2008 032 046 A1 bekannt, welche die Oberbegriffe der unabhängigen Ansprüche 1 und 17 offenbart.

Nachteilig hierbei ist, dass in der Hinterradlenkung für die Plausibilisierung und/oder Reinitialisierung ein notwendiger redundanter Sensor verbaut werden muss. Infolgedessen erhöhen sich hierdurch die Herstellungskosten der Hinterradlenkung. Ein weiterer Nachteil besteht darin, dass der Absolutsensor ausfallen kann und aufgrund dessen kann die Reinitialisierung nicht durchgeführt werden.

Eine Aufgabe der vorliegenden Erfindung ist es somit, ein Verfahren sowie eine Anordnung zu schaffen, mit der die vorstehenden Nachteile beseitigt werden können. Es wird eine Anordnung zur Plausibilisierung und/oder Reinitialisierung einer Hinterradlenkung eines Fahrzeugs vorgeschlagen. Die Anordnung umfasst eine Hinterradlenkungseinheit, die zumindest einen Hinterradaktuator zum Einstellen eines Hinterradlenkwinkels an der Hinterachse und einen Sensor zum Erfassen der Stellposition des Hinterradaktuators in Form eines Rotorlagensensors aufweist. Des Weiteren umfasst die Anordnung zumindest eine Referenzsensorik zum Erfassen eines Referenzsignals und ein elektronisches Steuergerät zum Durchführen der Plausibilisierung und/oder Reinitialisierung des Sensors des Hinterradaktuators. Dabei ist die Referenzsensorik aus zumindest einem Sensor gebildet, der erfindungsgemäß Bestandteil einer im Vergleich zur Hinterradlenkungseinheit anderen separaten Fahrzeugeinheit ist, gehört also nicht zur Hinterachslenkung. Die Referenzsensorik kann dabei neben dem Sensor weitere, zur Auswertung des Sensors bzw. dessen Signale benötigte Bauteile enthalten.

Des Weiteren ist die Referenzsensorik zum Erfassen eines vom Zustand des Fahrzeugs abhängigen Referenzsignals ausgebildet. Anhand des Referenzsignals kann demnach ein Rückschluss über den aktuellen Fahrzustand des Fahrzeugs erfolgen. Mit diesem Referenzwert und/oder Referenzfahrzeugzustand kann vom Steuergerät die Plausibilisierung und/oder Reinitialisierung durchgeführt werden. Die Hinterradlenkungseinheit benötigt somit keinen weiteren redundanten Sensor, um die ordnungsgemäße Funktionsfähigkeit des eigentlichen Sensors zu plausibilisieren und/oder um diesen zu reinitialisieren. Stattdessen können für diese Funktionalitäten bereits im Fahrzeug vorhandene andere Sensoren genutzt werden, die nicht Bestandteil der Hinterradlenkungseinheit, sondern einer anderen Fahrzeugeinheit sind. Hierdurch kann die Anordnung kostengünstig ausgebildet werden, da zumindest ein Sensor im Hinterradaktuator bzw. der Hinterradlenkung eingespart werden kann. Das Steuergerät weist zumindest ein mathematisches Modell auf. Das mathematische Modell ist derart ausgebildet, dass mittels diesem anhand des zumindest einen vom Zustand des Fahrzeugs abhängigen Referenzsignals ein Referenzwert und/oder ein Referenzfahrzeugzustand bestimmbar ist. Vorteilhaft ist es, wenn der Referenzwert und/oder Referenzfahrzeugzustand mittels des mathematischen Modells geschätzt und/oder berechnet wird. Hierdurch muss der Sensor die Stellung des Hinterradaktuators nicht unmittelbar erfassen. Stattdessen ist eine mittelbare Erfassung anderer Referenzsignale möglich, mittels derer anhand des mathematischen Modells dann der entsprechende Referenzwert und/oder Referenzzustand des Fahrzeugs bestimmt werden kann.

Bevorzugt kann die Anordnung als Referenzsensorik einen oder mehrere optische oder Magnetfelder detektierende Sensoren aufweisen, die als Teil eines Fahrerassistenzsystems das nähere Umfeld des Fahrzeugs überwachen. Als Sensor oder Sensoren der Referenzsensorik können z.B. eine oder mehrere Kameras und/oder Radar- und/oder Lidarsensoren genutzt werden, die sich an den Fahrspuren oder Fahrbahnbegrenzungen einer Fahrbahn orientieren. Auf diese Weise ist ein vom Zustand des Fahrzeugs abhängiges Referenzsignal, ein Referenzwert und/oder ein Referenzfahrzeugzustand bestimmbar. Mit anderen Worten ist die Orientierung des Fahrzeugs im Vergleich zur Fahrbahn erfassbar. Beispielsweise ist aus den Kameradaten, die die Fahrzeugumgebung erfassen, insbesondere mit Hilfe einer Bildverarbeitung, der Abstand des Fahrzeugs zumindest vorne und hinten zu einer Fahrspurbegrenzung (Mittellinie, Seitenbegrenzung) erfassbar. Vorzugsweise ist aus den Daten der optischen Sensoren mittels des Steuergeräts die Fahrtrichtung, die Fahrgeschwindigkeit sowie Beschleunigungen in Quer- und Längsrichtung und auch um die Hochachse des Fahrzeugs bestimmbar. Daraus ergibt sich neben der momentanen Orientierung des Fahrzeugs innerhalb der Fahrspur sowie dessen momentaner Bewegung und/oder Beschleunigung gegenüber der Fahrbahn auch eine berechenbare Vorhersage, welche Position das Fahrzeug aktuell und zukünftig einnehmen wird. Die Erfassung des Fahrzeugzustands kann alternativ oder zusätzlich insbesondere mit von einem Fahrerassistenzsystem erfassten GPS-Positionsdaten oder auch mit Car-to-Car-Informationen oder mit Car-to-X-Informationen genutzt werden. Ebenfalls können in einer Navigationseinheit des Fahrzeugs vorhandene Daten von dem Fahrerassistenzsystem genutzt werden, um den Fahrzeugzustand zu erfassen. Insbesondere handelt es sich dabei um Echtzeitdaten, die vom System verarbeitet werden.

Die Anordnung kann kostengünstig ausgebildet werden, wenn die Referenzsensorik Bestandteil einer Fahrstabilitätseinheit, insbesondere eines ESP-Systems, ist. Unter der Abkürzung "ESP" ist ein allgemein aus dem Stand der Technik bekanntes elektronisches Stabilitätsprogramm zu verstehen. Alternativ oder zusätzlich kann die Referenzsensorik Teil eines Fahrerassistenzsystems sein. Fahrerassistenzsysteme ermöglichen es, zumindest Teilaufgaben des Fahrers zu übernehmen. Diese reichen beispielsweise vom Halten der Fahrspur bis zum völlig autonomen Fahren. Derartige Einheiten weisen Sensoren auf, die zur Überwachung und Erfassung von Fahrzeugzuständen eingesetzt werden. Sie ermöglichen z.B. die Erfassung von Geschwindigkeiten, Beschleunigungen oder auch Drehraten um verschiedene Achsen des Fahrzeuges. Weitere Sensoren sind zuvor zur Referenzsensorik bei Fahrerassistenzsystemen bereits beschrieben worden.

Die Anordnung kann insbesondere dann kostengünstig ausgebildet werden, wenn das Steuergerät, auf dem sich das mathematische Modell befindet, ein Steuergerät der Hinterradlenkungseinheit und/oder ein Fremdsteuergerät, insbesondere der Fahrstabilitätseinheit oder eines Fahrerassistenzsystems, ist. Hierdurch benötigt die Anordnung kein separates weiteres Steuergerät. Stattdessen kann auf bereits vorhandene Steuergeräte zurückgegriffen werden. Das Steuergerät der Hinterachslenkung kann vorgenannte Referenzsignale auswerten, wenn diese miteinander verbunden sind. Auch kann das Referenzsignal vom Fremdsteuergerät ausgewertet und über bekannte Signalwege, wie z.B. CAN-Bus o.ä. an das Steuergerät der Hinterachslenkung geleitet werden. Der Datenaustausch oder die Signalweiterleitung kann auch drahtlos erfolgen.

Die Plausibilisierung und/oder Reinitialisierung kann besonders kostengünstig und genau durchgeführt werden, wenn mit einem mathematischen Modell für die Plausibilisierung als Referenzwert ein Referenz-Vorderradlenkwinkel und/oder für die Reinitialisierung als Referenzwert ein Referenz-Hinterradlenkwinkel bestimmbar ist.

Ein mathematisches Modell kann besonders einfach ausgebildet werden, wenn mittels diesem für die Plausibilisierung und/oder Reinitialisierung als Referenzfahrzeugzustand eine Geradeausfahrt des Fahrzeugs bestimmbar ist.

Auch ist es vorteilhaft, wenn die Anordnung einen Ist-Sensor zum Erfassen eines Ist-Wertes umfasst. Vorzugsweise ist mit dem Ist-Sensor für die Plausibilisierung und/oder Reinitialisierung ein Ist-Vorderradlenkwinkel und/oder ein Ist-Hinterradlenkwinkel erfassbar. Anhand dieser Ist-Werte kann sehr einfach die Plausibilisierung und/oder Reinitialisierung durchgeführt werden.

Aus selbigen Gründen ist es ferner vorteilhaft, wenn der Ist-Sensor ein Vorderrad-Lenkwinkelsensor zum Erfassen des Ist-Vorderradlenkwinkels ist. Der Vorderrad-Lenkwinkelsensor ist hierbei insbesondere Bestandteil der anderen, von der Hinterradlenkung verschiedenen Fahrzeugeinheit. Zusätzlich oder alternativ ist es vorteilhaft, wenn der Ist-Sensor ein Hinterrad-Lenkwinkelsensor zum Erfassen des Ist-Hinterradlenkwinkels ist. Der Hinterrad-Lenkwinkelsensor ist vorzugsweise Bestandteil der Hinterachse, um den Winkel des Radträgers gegenüber der Hinterachse zu erfassen. Es ist damit Teil einer von der Hinterradlenkungseinheit oder separaten oder einer anderen Fahrzeugeinheit.

Vorteilhaft ist es, wenn von dem Steuergerät zur Plausibilisierung und/oder Reinitialisierung der vom mathematischen Modell bestimmbare Referenzwert und/oder Referenzfahrzeugzustand mit dem vom Ist-Sensor erfassten Ist-Wert abgleichbar ist. Des Weiteren ist es vorteilhaft, wenn durch diesen Abgleich ein Ergebniswert und/oder Abgleichergebnis durch das Steuergerät bereitstellbar ist.

Zur Durchführung der Plausibilisierung ist es vorteilhaft, wenn mit dem Steuergerät bei als Referenzzustand des Fahrzeugs festgestellter Geradeausfahrt überprüfbar ist, ob der Ist-Vorderradlenkwinkel den Ergebniswert Null aufweist.

Für die Plausibilisierung ist es ferner vorteilhaft, wenn mit dem Steuergerät überprüfbar ist, ob der Ist-Vorderradlenkwinkel vom Referenz-Vorderradlenkwinkel abweicht oder ein Ergebnis von Null vorliegt.

Für die Plausibilisierung ist es ferner vorteilhaft, wenn mit dem Steuergerät bei einem Ergebniswert gleich Null als Abgleichergebnis "kein Fehler des Sensors" oder mit anderen Worten dessen einwandfreie Funktion feststellbar ist. Bei einem Ergebniswert gleich Null ist "ein Fehler des Sensors" feststellbar. Für die Reinitialisierung ist es vorteilhaft, wenn das Steuergerät derart ausgebildet ist, dass mittels diesem bei als Referenzzustand des Fahrzeugs festgestellter Geradeausfahrt überprüfbar ist, ob der Ist-Vorderradlenkwinkel den Ergebniswert Null aufweist und die Vorderräder somit parallel zur Längsachse des Fahrzeugs ausgerichtet sind.

Ferner ist für die Reinitialisierung vorteilhaft, wenn mit dem Steuergerät überprüfbar ist, ob der Referenz-Hinterradlenkwinkel vom Ist-Hinterradlenkwinkel abweicht oder ein Ergebnis von Null vorliegt.

Des Weiteren ist für die Reinitialisierung vorteilhaft, wenn mit dem Steuergerät bei einem Ergebniswert gleich Null als Abgleichergebnis ein reinitialisierter Sensor und bei einer als Ergebniswert festgestellten Differenz ein nicht initialisierter Sensor feststellbar ist.

Des Weiteren ist es zur Reinitialisierung des Sensors vorteilhaft, wenn von dem Steuergerät die festgestellte Differenz als Offsetkorrekturwert für den Sensor in einem ersten Speicher, insbesondere einem RAM, speicherbar und/oder verwendbar ist. Ein RAM ist ein flüchtiger Speicher, der bei Stromverlust sämtliche Daten verliert. Alternativ kann für den ersten Speicher auch ein EEPROM eingesetzt werden.

Vorteilhaft ist es, wenn der Hinterradaktuator einen Elektromotor mit einem um eine Drehachse drehbaren Rotor zum Verstellen des Hinterradlenkwinkels aufweist. Zusätzlich oder alternativ ist es vorteilhaft, wenn der Sensor ein Rotorlagesensor ist, mittels dem in einem Sensorerfassungsbereich, der insbesondere 360°, also volle Umdrehungen umfasst, die Rotorlage des Hinterradaktuators erfassbar ist.

Vorteilhaft ist es, wenn von dem Steuergerät im Rahmen der Reinitialisierung nach einer durch die Ermittlung des Offsetkorrekturwertes erfolgten Grobinitialisierung eine zusätzliche Feininitialisierung innerhalb des Sensorerfassungsbereiches durchführbar ist. Hierdurch kann die Genauigkeit im Rahmen der Reinitialisierung stark verbessert werden.

In diesem Zusammenhang ist es vorteilhaft, wenn die Anordnung einen zweiten Speicher, insbesondere einen ROM, vorzugsweise ein EEPROM, aufweist. Ein ROM zeichnet sich dadurch aus, dass dieser bei Stromverlust keine Daten verliert. Der zweite Speicher ist vorzugsweise derart ausgebildet, dass auf diesem eine Rotornulllage innerhalb des Sensorerfassungsbereiches dauerhaft abgespeichert ist. Zusätzlich oder alternativ ist es vorteilhaft, wenn der Rotorlagesensor von dem Steuergerät anhand der abgespeicherten Rotornulllage feininitialisierbar ist. Ein EEPROM (engl. Abk. für electrically erasable programmable read-only memory) ist ein elektrisch löschbarer programmierbarer Nur-Lese-Speicher. Das ist ein nichtflüchtiger, elektronischer Speicherbaustein, dessen gespeicherte Information elektrisch gelöscht werden kann. Die dort gespeicherten Daten verbleiben somit im Speicher auch wenn die Bordspannung des Fahrzeugs abgeschaltet wird.

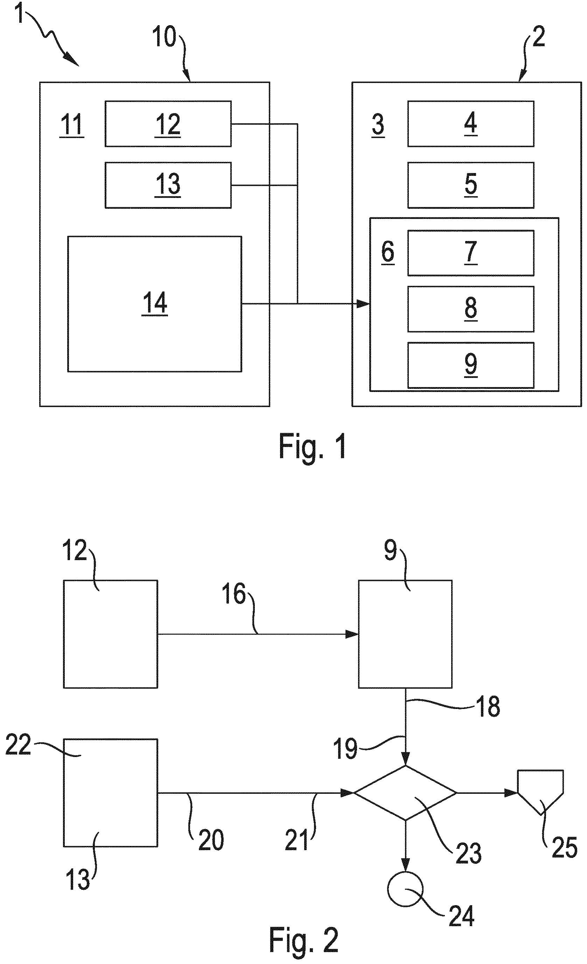

Vorgeschlagen wird ferner ein Verfahren zur Plausibilisierung und/oder Reinitialisierung einer Hinterradlenkung eines Fahrzeugs. Das Verfahren wird mit einer Anordnung gemäß der vorangegangenen Beschreibung durchgeführt, wobei die genannten Merkmale einzeln oder in beliebiger Kombination vorhanden sein können. Das Verfahren zeichnet sich durch die folgenden Schritte aus, wobei die Abfolge der Schritte beliebig sein kann: Erfassen einer Stellposition eines Hinterradaktuators mittels eines Sensors der Hinterradlenkung in Form eines Rotorlagesensors eines Stellmotors oder Aktuators, Erfassen eines vom Zustand des Fahrzeugs abhängigen Referenzsignals mittels einer Referenzsensorik, Bestimmen eines Referenzwertes und/oder eines Referenzfahrzeugzustands, wobei ein Steuergerät die Plausibilisierung und/oder Reinitialisierung durchführt und Signale der Referenzsensorik auswertet. Zu den Ausbildungen von Verfahrensabläufen wird auf die Beschreibung der Ausführungsbeispiele mit den zugehörigen Figuren 2 bis 8 erwiesen.

Durch das Verfahren kann die Hinterradlenkungseinheit ohne einen bislang benötigten zusätzlichen Absolutsensor arbeiten, da von der Hinterradlenkung separate bereits im Fahrzeug vorhandene Sensoren verwendet bzw. ausgewertet werden können, um mittelbar über das mathematische Modell, welches auf einem Steuergerät ausgeführt wird, eine entsprechende Plausibilisierung und/oder die Reinitialisierung der Hinterradlenkung des Fahrzeugs durchführen zu können. Hierdurch kann das Verfahren zur Plausibilisierung und/oder Reinitialisierung der Hinterradlenkung sehr effektiv, einfach und somit kostengünstig ausgebildet werden.

Ferner betrifft die Erfindung ein Steuergerät, auf dem ein mathematisches Modell eines Fahrzeugs ausführbar ist. Das Modell kann als Einspur- oder Mehrspurmodell ausgeführt sein und berücksichtigt u.a. Lenkwinkel, Momente, Kräfte sowie Beschleunigungen und Geschwindigkeiten an den Rädern bzw. am Fahrzeug. Das lineare Einspurmodell ist dabei die einfachste Modellvorstellung zur Erklärung der stationären und instationären Querdynamik von zweispurigen Kraftfahrzeugen, welches z.B. in ESP-Steuergeräten eingesetzt wird, wo es z.B. zur Fahrerwunsch-Erkennung eingesetzt wird. Das Steuergerät weist zumindest einen Speicher auf, in dem Daten und Werte von Signalgebern wie z.B. Sensoren gespeichert werden können. Vorzugsweise sind RAM- und ROM-Speicher vorhanden und das Steuergerät kann anhand der zugeführten Daten bzw. Signale Schätzungen und/oder Berechnungen ausführen, um aus den vorgenannten Referenzsignalen Plausibilisierungen und/oder Reinitialisierungen durchführen zu können.

Nachfolgend ist die Erfindung anhand von Zeichnungen näher erläutert. Es zeigen:
- Figur 1: eine schematische Darstellung einer Anordnung zur Plausibilisierung und/oder Reinitialisierung einer Hinterradlenkung eines Fahrzeugs,
- Figur 2: ein Flussdiagramm der Arbeitsweise einer Anordnung zur Plausibilisierung der Hinterradlenkung des Fahrzeugs gemäß einem ersten Ausführungsbeispiel,
- Figur 3: ein Flussdiagramm der Arbeitsweise einer Anordnung zur Plausibilisierung der Hinterradlenkung des Fahrzeugs gemäß einem zweiten Ausführungsbeispiel,
- Figur 4: ein Flussdiagramm der Arbeitsweise einer Anordnung zur Reinitialisierung der Hinterradlenkung des Fahrzeugs gemäß einem ersten Ausführungsbeispiel,
- Figur 5: ein Flussdiagramm der Arbeitsweise einer Anordnung zur Reinitialisierung der Hinterradlenkung gemäß einem zweiten Ausführungsbeispiel,
- Figur 6: ein Flussdiagramm der Arbeitsweise einer Anordnung zur Reinitialisierung der Hinterradlenkung gemäß einem dritten Ausführungsbeispiel,
- Figur 7: zeigt eine schematische Darstellung eines Fahrzeugs in einer ersten Fahrsituation und
- Figur 8: ein Fahrzeug in schematischer Darstellung in einer weiteren Fahrsituation.

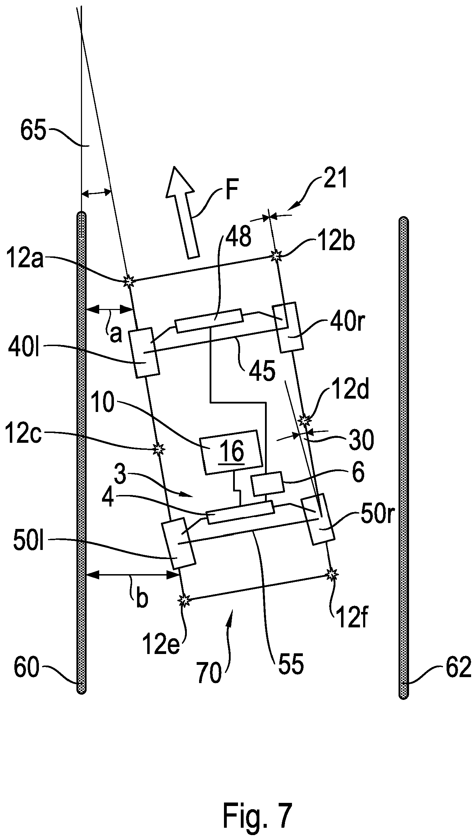

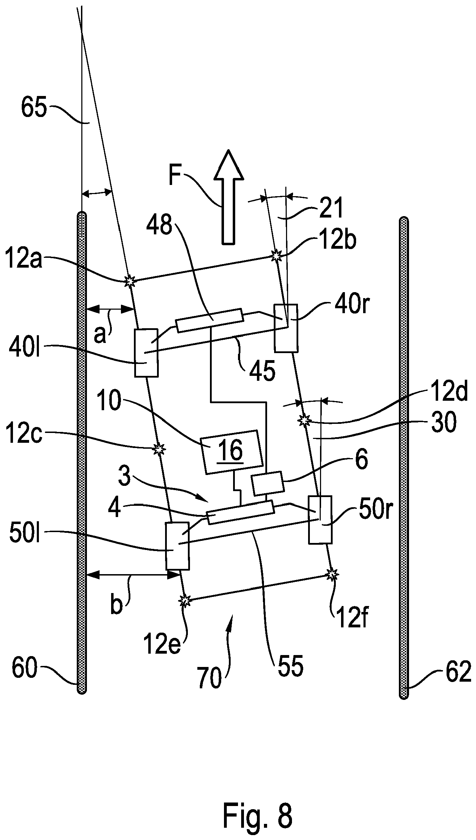

Figur 1 zeigt schematisch eine Anordnung 1 zur Plausibilisierung und/oder Reinitialisierung einer Hinterradlenkung eines in Figur 7 oder 8 dargestellten Fahrzeugs 70. Die Anordnung 1 umfasst zwei Fahrzeugeinheiten 2, 10. Die erste Fahrzeugeinheit 2 ist hierbei eine Hinterradlenkungseinheit 3. Mittels dieser kann ein Hinterradlenkwinkel zumindest eines Hinterrades des Fahrzeugs eingestellt werden. Die Hinterradlenkungseinheit 3 umfasst einen Hinterradaktuator 4, über den der Hinterradlenkwinkel eingestellt werden kann. Des Weiteren umfasst die Hinterradlenkungseinheit 3 einen Sensor 5. Mit dem Sensor 5 kann die Stellposition des Hinterradaktuators 4 erfasst werden. Außerdem weist die Hinterradlenkungseinheit 3 ein Hinterradsteuergerät 6 auf, das vom Sensor 5 ein Sensorsignal, das heißt die Rotorlage, übermittelt bekommt und anhand dessen den Hinterradaktuator 4 zum Einstellen des gewünschten Hinterradlenkwinkels ansteuern kann.

Des Weiteren umfasst die Anordnung 1 einen ersten Speicher 7. Der erste Speicher 7 ist als RAM ausgebildet. Ferner umfasst die Anordnung 1 einen zweiten Speicher 8. Dieser ist als ROM ausgebildet. Gemäß dem vorliegenden Ausführungsbeispiel umfasst die Hinterradlenkungseinheit 3 den ersten und zweiten Speicher 7, 8. Diese sind ferner vorzugsweise Bestandteil des Hinterradsteuergeräts 6.

Wie bereits vorstehend erwähnt umfasst die Anordnung 1 eine zweite von der Hinterradlenkung verschiedene Fahrzeugeinheit 10. Vorliegend ist die zweite Fahrzeugeinheit 10 insbesondere als Fahrstabilitätseinheit 11 ausgebildet und separat zu der Hinterachslenkung ausgebildet. Die Fahrstabilitätseinheit 11 ist hier vorzugsweise ein ESP-System, das das Fahrzeug in kritischen Fahrsituationen durch gezieltes Bremsen einzelner Räder stabilisiert. Das ESP-System weist Sensoren auf, welche Geschwindigkeiten, Drehraten und/oder Beschleunigungen um verschiedene Achsen des Fahrzeugs erfassen.

Die zweite Fahrzeugeinheit 10 umfasst eine Referenzsensorik 12. Die Referenzsensorik 12 wird innerhalb der zweiten Fahrzeugeinheit 10 verwendet, um die der zweiten Fahrzeugeinheit 10 zugeordnete Teilaufgabe entsprechend erfüllen zu können. Die Referenzsensorik 12 ist somit für die Hinterradlenkungseinheit 3 systemfremd, d.h. weist zumindest einen Sensor auf, der nicht Bestandteil der Hinterradlenkungseinheit 3 ist. Die Referenzsensorik 12 erfasst ein vom Zustand des Fahrzeugs abhängiges Referenzsignal 16 (vgl. Figur 2 bis 8). Die Begrifflichkeit "vom Zustand des Fahrzeugs abhängig" bedeutet in diesem Zusammenhang, dass anhand des Referenzsignals 16 mittelbar oder unmittelbar ein Rückschluss auf den fahrdynamischen Zustand des Fahrzeugs erfolgen kann. Bei dem zumindest einen vom Zustand des Fahrzeugs abhängigen Referenzsignal 16 kann es sich somit beispielsweise um die Geschwindigkeit oder Drehrate zumindest eines Rades bzw. Reifens handeln. Zusätzlich oder alternativ können auch GPS-Daten, die Gierrate des Fahrzeugs, die Längsbeschleunigung und/oder die Querbeschleunigung des Fahrzeugs ein vom Zustand des Fahrzeugs abhängiges Referenzsignal 16 darstellen. Gemäß Figur 1 ist der Sensor der Referenzsensorik 12 Bestandteil der zweiten Fahrzeugeinheit 10.

Ferner weist die Anordnung 1 einen Ist-Sensor 13 auf. Über den Ist-Sensor 13 können vorzugsweise ebenfalls vom Zustand des Fahrzeugs abhängige Informationen erfasst werden. Der Ist-Sensor 13 ist gemäß Figur 1 von der zweiten Fahrzeugeinheit 10 umfasst. Zusätzlich oder alternativ kann der Ist-Sensor 13 aber auch ebenso von der ersten Fahrzeugeinheit 2 umfasst sein. Gemäß Figur 1 weist die zweite Fahrzeugeinheit 10 des Weiteren ein Fremdsteuergerät 14 auf. Bei diesem kann es sich um ein ESP-Steuergerät handeln, das von verschiedensten Sensoren im Fahrzeug Informationen erhält und zur Entschärfung kritischer Fahrsituationen Aktuatoren im Fahrzeug, insbesondere Bremsen sowie Vorder- und/oder Hinterradlenkung, ansteuert.

Gemäß Figur 1 umfasst die Anordnung 1 ferner ein mathematisches Modell 9. Das mathematische Modell 9 ist von zumindest einer der beiden Fahrzeugeinheiten 2, 10, insbesondere von einer der Steuergeräte 6, 14 umfasst bzw. wird auf einem dieser Steuergeräte ausgeführt. Gemäß dem vorliegenden Ausführungsbeispiel weist das Hinterradsteuergerät 6 der Hinterradlenkungseinheit 3 das mathematische Modell 9 auf. Alternativ könnte dieses aber auch ebenso in dem Fremdsteuergerät 14 implementiert sein und auf diesem ausgeführt werden.

Das mathematische Modell 9 ist derart ausgebildet, dass mittels diesem anhand des vom Zustand des Fahrzeugs abhängigen Referenzsignals 16 des Referenzsensors 12 ein Referenzwert 17 und/oder ein Referenzfahrzeugzustand 18 bestimmbar ist, insbesondere schätzbar und/oder berechenbar ist. Das Steuergerät 6, 14 der Anordnung 1, insbesondere das Hinterradsteuergerät 6, ist derart ausgebildet, dass dieses anhand des Referenzwertes 17 und/oder des Referenzfahrzeugzustands 18 eine Plausibilisierung und/oder Reinitialisierung des Sensors 5 durchführen kann. Wie diese Plausibilisierung und/oder Reinitialisierung im Detail erfolgt, wird in der nachfolgenden Beschreibung detailliert erläutert (vgl. Figur 2 bis 8).

Dadurch, dass die Hinterradlenkungseinheit 3 einen Sensor einer anderen Fahrzeugeinheit 10 nutzt, kann vorteilhafterweise innerhalb der Hinterradlenkungseinheit 3 ein somit nicht dargestellter Absolutsensor eingespart werden. Vorteilhafterweise kann die Anordnung 1 somit kostengünstiger ausgebildet werden.

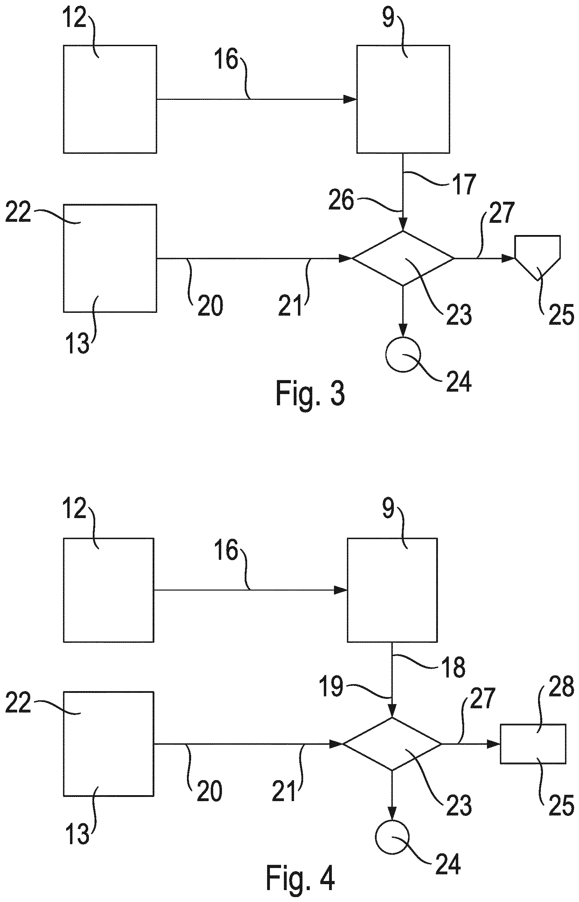

In den Figuren 2 und 3 sind zwei unterschiedliche Ausführungsbeispiele von Verfahren zur Plausibilisierung des Sensors 5 dargestellt. So zeigt Figur 2 gemäß einem ersten Ausführungsbeispiel ein vereinfachtes Flussdiagramm zur Plausibilisierung der Hinterradlenkung. Hiernach wird zunächst über die zur Hinterradlenkungseinheit 3 externe Referenzsensorik 12 das vom Zustand des Fahrzeugs abhängige Referenzsignal 16 erfasst. Vorzugsweise ist dieses Referenzsignal 16 die Gierrate des Fahrzeugs (Drehrate um die Hochachse des Fahrzeugs), die Radgeschwindigkeit zumindest eines Rades des Fahrzeugs, GPS-Daten des Fahrzeugs, eine Längsbeschleunigung des Fahrzeugs und/oder zumindest eine Querbeschleunigung des Fahrzeugs.

Das vom Zustand des Fahrzeugs abhängige Referenzsignal 16 des Referenzsensors 12 wird gemäß Figur 2 dem mathematischen Modell 9 zugeführt. Wie bereits vorstehend erwähnt, befindet sich das mathematische Modell 9 vorzugsweise auf dem Steuergerät der Hinterradlenkungseinheit 3, nämlich dem Hinterradsteuergerät 6. Alternativ oder zusätzlich kann das mathematische Modell 9 ferner auf einem Steuergerät laufen, dass sich außerhalb der Hinterradlenkungseinheit 3 befindet. Vorliegend ist dieses insbesondere das Fremdsteuergerät 14, das Bestandteil der zweiten Fahrzeugeinheit 10 ist (vgl. Figur 1).

Gemäß dem in Figur 2 dargestellten ersten Ausführungsbeispiel bestimmt das mathematische Modell 9 für die Plausibilisierung des Hinterradaktuators 4 als Referenzfahrzeugzustand 18 eine Geradeausfahrt 19 des Fahrzeugs. Neben dem fahrzeugzustandsabhängigen Referenzsignal 16, aus dem das Steuergerät 6, 14 mit Hilfe des mathematischen Modells 9 vorliegend den Referenzfahrzeugzustand 18 ermittelt, erhält das Steuergerät 6, 14 des Weiteren vom Ist-Sensor 13 einen Ist-Wert 20. Gemäß dem in Figur 2 dargestellten Ausführungsbeispiel liefert der Ist-Sensor 13 einen Ist-Vorderradlenkwinkel 21. Infolgedessen ist der Ist-Sensor13 vorzugsweise als Vorderrad-Lenkwinkelsensor 22 ausgebildet.

Gemäß dem in Figur 2 dargestellten Ausführungsbeispiel überprüft das Steuergerät 6, 14 demnach bei als Referenzfahrzeugzustand 18 festgestellter Geradeausfahrt 19 des Fahrzeugs, ob der Ist-Vorderradlenkwinkel 21 einen Ergebniswert 23 von Null aufweist. Für die Plausibilisierung kann das Steuergerät 6, 14 bei einem Ergebniswert 23 gleich Null als erstes Abgleichergebnis 24 keinen Fehler des Sensors 5 bzw. einen fehlerfrei arbeitenden Sensor 5 feststellen. Wenn der Ergebniswert 23 ungleich Null ist, kann das Steuergerät 6, 14 als zweites Abgleichergebnis 25 eine Offsetkorrektur vornehmen oder auf einen Fehler des Sensors 5 schließen. In letzteren Fall würde die Hinterachslenkung abgeschaltet und in eine Nulllage gefahren (Lenkwinkel an der Hinterachse ist gleich null) und es muss der fehlerhafte Sensor 5 der Hinterradlenkungseinheit 3 ersetzt werden.

Figur 3 zeigt ein weiteres Ausführungsbeispiel, wie die Anordnung 1 eine Plausibilisierung des Sensors 5 der Hinterradlenkungseinheit 3 vornehmen kann. Wie auch bei dem in Figur 2 dargestellten Ausführungsbeispiel wird von zumindest einem Referenzsensor 12 der Anordnung 1 zumindest ein vom Zustand des Fahrzeugs abhängiges Referenzsignal 16 erfasst und an das zumindest eine mit dem mathematischen Modell 9 ausgebildete Steuergerät 6, 14 übermittelt. Im Unterschied zu dem in Figur 2 dargestellten Ausführungsbeispiel wird gemäß dem in Figur 3 dargestellten Ausführungsbeispiel kein Referenzfahrzeugzustand 18, sondern ein Referenzwert 17 mit dem mathematischen Modell 9 bestimmt, insbesondere geschätzt und/oder berechnet. Gemäß dem vorliegenden Ausführungsbeispiel handelt es sich bei dem Referenzwert 17 um einen Referenz-Vorderradlenkwinkel 26. Anhand der fahrzeugzustandsabhängigen Referenzsignale 16 bestimmt das mathematische Modell 9 demnach, welchen Referenz-Vorderradlenkwinkel 26 das Fahrzeug in der aktuellen Fahrsituation aufweisen müsste.

Um einen Abgleich durchführen zu können, erhält das Steuergerät 6, 14, welches das mathematische Modell 9 umfasst, wie auch in dem in Figur 2 dargestellten Ausführungsbeispiel, einen Ist-Wert 20, der von dem Ist-Sensor 13 geliefert wird. Bei dem Ist-Sensor 13 handelt es sich um einen Fahrzeugsensor, der Bestandteil der Hinterradlenkungseinheit 3 oder aber auch eine andere Fahrzeugeinheit 10 sein kann. Der Ist-Sensor 13 erfasst vorzugsweise ebenfalls ein vom Zustand des Fahrzeugs abhängiges Signal, das den Ist-Wert 20 bildet. Gemäß dem in Figur 3 dargestellten Ausführungsbeispiel ist der Ist-Wert 20, wie auch bei dem in Figur 2 dargestellten Ausführungsbeispiel, der Ist-Vorderradlenkwinkel 21.

Das Steuergerät 6, 14 gleicht den sensorisch erfassten Ist-Vorderradlenkwinkel 21 mit dem über das mathematische Modell 9 bestimmten Referenz-Vorderradlenkwinkel 26 ab. Der Ergebniswert 23 kann hierbei gleich oder ungleich Null sein. Wenn der Ist-Vorderradlenkwinkel 21 gemäß einem ersten Abgleichergebnis 24 gleich dem Referenz-Vorderradlenkwinkel 26 ist, stellt das Steuergerät 6, 14 als erstes Abgleichergebnis 24 fest, dass der Sensor 5 fehlerfrei arbeitet. Wenn jedoch zwischen dem Ist-Vorderradlenkwinkel 21 und dem Referenz-Vorderradlenkwinkel 26 eine Differenz 27 festgestellt wird, wird als zweites Abgleichergebnis 25 eine Offsetkorrektur vorgenommen oder es wird auf eine Dekalibrierung oder einen Fehler des Sensors 5 geschlossen. Im letzteren Fall ist der fehlerhafte Sensor 5 zu ersetzen.

Gemäß dem in Figur 2 und 3 dargestellten Ausführungsbeispiel kann somit zur Überprüfung des Sensors 5 ein zusätzlicher separater Sensor in der Hinterradlenkungseinheit 3 eingespart werden. Stattdessen können zur Ermittlung des vom Zustand des Fahrzeugs abhängigen Referenzsignals 16 andere bereits im Fahrzeug vorhandene Sensoren, nämlich solche der Referenzsensorik 12, genutzt werden, um in Kombination mit dem in dem Steuergerät 6, 14 hinterlegten mathematischen Modell 9 eine Überprüfung des Sensors 5 (insbesondere Rotorlagesensor) durchführen zu können.

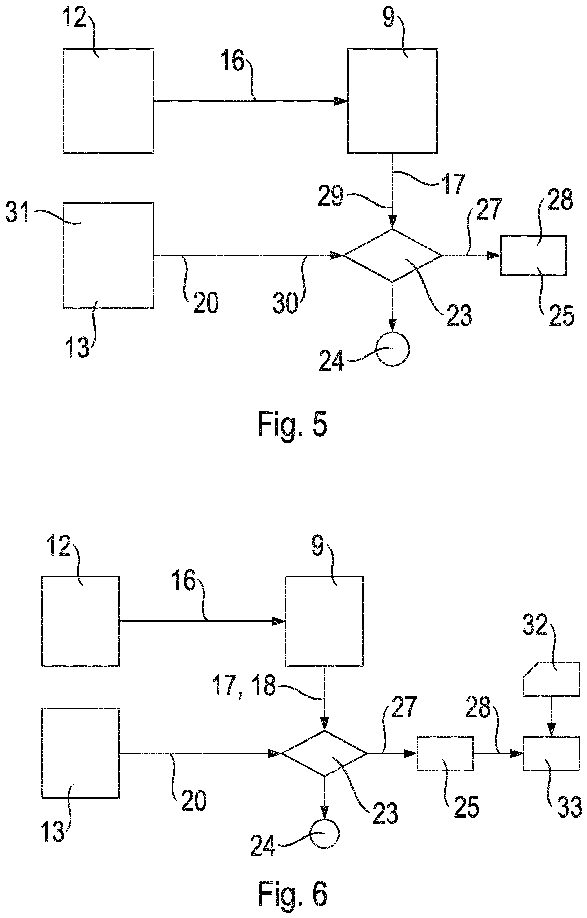

Zusätzlich oder alternativ kann das mathematische Modell 9 bzw. das Steuergerät 6, 14, auf dem das mathematische Modell 9 ausgeführt wird, derart ausgebildet sein, dass mittels diesem eine Reinitialisierung der Hinterradlenkung des Fahrzeugs, insbesondere des Sensors 5, durchgeführt werden kann. In Figur 4 und Figur 5 sind zwei Ausführungsbeispiele dargestellt, wie mittels des mathematischen Modells 9 eine derartige Reinitialisierung durchgeführt werden kann.

Gemäß dem in Figur 4 dargestellten Ausführungsbeispiel erhält das Steuergerät 6, 14 wie auch bei den im Falle der Plausibilisierung in Figur 2 und 3 dargestellten Ausführungsbeispielen, von der Referenzsensorik 12 ein Referenzsignal 16. Auch in diesem Fall handelt es sich um einen Sensor der Referenzsensorik 12, der nicht Bestandteil der Hinterradlenkungseinheit 3, sondern einer anderen Fahrzeugeinheit 10, insbesondere der Fahrstabilitätseinheit 11, ist. Wie auch in dem in Figur 2 dargestellten Ausführungsbeispiel kann das mathematische Modell 9 anhand des zumindest einen vom Zustand des Fahrzeugs abhängigen Referenzsignals 16 feststellen, ob eine Geradeausfahrt 19 des Fahrzeugs vorliegt. Das mathematische Modell 9 ermittelt demnach als Referenzfahrzeugzustand 18 eine Geradeausfahrt 19 des Fahrzeugs anhand des vom Referenzsensor 12 gelieferten vom Zustand des Fahrzeugs abhängigen Referenzsignals 16.

Ferner nutzt das Steuergerät 6, 14 gemäß dem in Figur 4 dargestellten Ausführungsbeispiel - wie auch im Falle zur Plausibilisierung gemäß dem in Figur 2 dargestellten Ausführungsbeispiel - als Ist-Wert 20 den Ist-Vorderradlenkwinkel 21. Infolgedessen ist der Ist-Sensor 13 auch in diesem Fall vorzugsweise ein Vorderrad-Lenkwinkelsensor 22.

Das Steuergerät 6, 14 überprüft bei festgestellter Geradeausfahrt 19, ob der Ist-Vorderradlenkwinkel 21 den Ergebniswert 23 gleich Null aufweist. Bei festgestellter Geradeausfahrt 19 sollte bei reinitialisiertem Sensor 5 der Ist-Vorderradlenkwinkel 21 gleich Null sein. Wenn das Steuergerät 6, 14 gemäß einem ersten Abgleichergebnis 24 keine Abweichung, insbesondere innerhalb eines Toleranzbereiches, des Ist-Vorderradlenkwinkels 21 von Null feststellen kann, liegt demnach ein initialisierter und/oder kalibrierter Sensor 5 vor (wie beim Einbau der Lenkung). Wenn jedoch als zweites Abgleichergebnis 25 eine Abweichung des Ist-Vorderradlenkwinkels 21 von Null bzw. eine Differenz 27 festgestellt werden kann, ist das zweite Abgleichergebnis 25 ein dekalibrierter Sensor 5.

Um den als dekalibriert festgestellten Sensor 5 zu reinitialisieren, verwendet das Steuergerät 6, 14 die festgestellte Differenz 27 als Offsetkorrekturwert 28 für den Sensor 5. Dieser Offsetkorrekturwert 28 wird vorzugsweise in dem ersten Speicher 7, der vorzugsweise als RAM ausgebildet ist, abgespeichert (vgl. Figur 1). Dieser abgespeicherte Offsetkorrekturwert 28 wird somit von dem Steuergerät 6, 14 verwendet bzw. berücksichtigt, so dass die Nulllage des Hinterradaktuators 4, insbesondere innerhalb eines Toleranzbereiches, bestimmt ist.

Bei dem in Figur 4 dargestellten Ausführungsbeispiel zur Reinitialisierung ist das mathematische Modell 9 insbesondere Bestandteil der Hinterradlenkungseinheit 3. Infolgedessen ist das mathematische Modell 9 vorzugsweise auf dem Hinterradsteuergerät 6 hinterlegt und wird auf diesem ausgeführt.

Die Reinitialisierung des Sensors 5 kann zusätzlich oder alternativ gemäß dem in Figur 5 dargestellten Ausführungsbeispiel erfolgen. In diesem Fall ermittelt das mathematische Modell 9 - bzw. das Steuergerät 6, 14 unter Verwendung des mathematischen Modells 9 - anhand des zumindest einen vom Zustand des Fahrzeugs abhängigen Referenzsignals 16 als Referenzwert 17 einen Referenz-Hinterradlenkwinkel 29. Zum Abgleich verwendet das Steuergerät 6, 14 als Ist-Wert 20 einen Ist-Hinterradlenkwinkel 30. Dieser wird dem Steuergerät 6, 14 von dem Ist-Sensor 13 geliefert. Gemäß dem vorliegenden Ausführungsbeispiel ist dieser Ist-Sensor 13 vorzugsweise ein Hinterrad-Lenkwinkelsensor 31. Dieser Hinterrad-Lenkwinkelsensor 31 ist vorzugsweise Teil einer im Vergleich zur Hinterradlenkungseinheit 3 fremden Fahrzeugeinheit 10. Zusätzlich oder alternativ kann der Hinterrad-Lenkwinkelsensor 31 aber auch Bestandteil der Hinterradlenkungseinheit 3 sein.

Gemäß Figur 5 überprüft das Steuergerät 6, 14, ob zwischen dem sensorisch erfassten Ist-Hinterradlenkwinkel 30 und dem anhand des mathematischen Modells 9 bestimmten, insbesondere berechneten und/oder geschätzten, Referenz-Hinterradlenkwinkel 29 eine Differenz 27 vorliegt. Wenn der Ist-Hinterradlenkwinkel 30 und der Referenz-Hinterradlenkwinkel 29, insbesondere innerhalb eines Toleranzbereiches, gleich sind bzw. keine Differenz 27 vorliegt, wird als erstes Abgleichergebnis 24 ausgegeben, dass der Sensor 5, zumindest innerhalb des bestimmten Toleranzbereiches, initialisiert ist.

Bei Vorliegen einer Differenz 27 wird als zweites Abgleichergebnis 25 festgestellt, dass der Sensor 5 dekalibriert ist bzw. noch nicht reinitialisiert ist. Zur Reinitialisierung des Sensors 5 wird deshalb die festgestellte Differenz 27 zwischen dem Referenz-Hinterradlenkwinkel 29 und dem Ist-Hinterradlenkwinkel 30 als Offsetkorrekturwert 28 verwendet. Hierfür wird der ermittelte Offsetkorrekturwert 28 vorzugsweise in dem RAM der Anordnung 1 abgespeichert. Dies erfolgt vorzugsweise in einem vorliegend nicht dargestellten Speicher der zweiten Fahrzeugeinheit 10. Infolgedessen ist es vorteilhaft, wenn das mathematische Modell 9 ebenfalls auf dem Steuergerät der fremden Fahrzeugeinheit, vorliegend auf dem Fremdsteuergerät 14, ausgeführt wird. Hierdurch wird ein von der zweiten Fahrzeugeinheit 10, insbesondere der Fahrstabilitätseinheit 11, an die Hinterradlenkungseinheit 3 gesendetes Lenksignal bereits im Vorfeld korrigiert, so dass die Hinterradlenkungseinheit 3 nicht mehr selbstständig eine Korrektur vornehmen muss, sondern bereits den korrigierten Lenkwinkelt erhält. Alternativ ist es aber auch ebenso denkbar, dass das mathematische Modell 9 Bestandteil der Hinterradlenkungseinheit 3 ist. In diesem Fall würde gemäß dem in Figur 5 dargestellten Ausführungsbeispiel von der zweiten Fahrzeugeinheit 10, insbesondere der Fahrstabilitätseinheit 11, ein dekalibriertes bzw. fehlerhaftes Signal an die Hinterradlenkungseinheit 3 gesendet werden. Erst in der Hinterradlenkungseinheit 3 würde dann anhand des ermittelten und/oder in dieser abgespeicherten Offsetkorrekturwertes 28 eine Korrektur des fehlerhaften Signals vorgenommen werden. Gemäß dem in Figur 4 und 5 dargestellten Ausführungsbeispiel kann insbesondere eine Grobinitialisierung vorgenommen werden. Bei einer derartigen Grobinitialisierung wird die Dekalibrierung nicht vollständig behoben, sondern lediglich bis zu einem vorbestimmten Toleranzbereich. Aufgrund dessen kann dem in Figur 4 und 5 dargestellten Grobinitialisierungsprozess gemäß Figur 6 eine Feininitialisierung 33 nachgelagert sein. Dies ist insbesondere dann möglich, wenn der Hinterradaktuator 4 einen vorliegend nicht dargestellten Rotor aufweist, der um eine Drehachse verdrehbar ist. Die Drehbewegung des Rotors des Hinterradaktuators 4 wird hierbei über eine entsprechende Mechanik in eine lineare Lenkbewegung der Hinterradlenkung umgesetzt. Vorzugsweise wird die Drehbewegung des Rotors in eine lineare Bewegung gewandelt, so dass eine Stellbewegung und damit ein Lenken zumindest eines Rades vorgenommen werden kann. Der Sensor 5 ist als Rotorlagesensor ausgebildet. Der Rotorlagesensor kann demnach die Lage des Rotors des Hinterradaktuators 4 innerhalb eines Sensorerfassungsbereichs erfassen, der insbesondere 360° umfasst. Wenn der Rotor mehrmals in eine Richtung vollständig rotiert wurde, kann der Rotorlagesensor somit nicht den absoluten Lenkwinkel feststellen. Mittels der vorstehend beschriebenen Grobinitialisierung kann die Rotornulllage bis auf eine Genauigkeit von 360° bestimmt werden. Durch die nachgelagerte Feininitialisierung 33 kann nunmehr innerhalb des Sensorerfassungsbereiches von 360° die exakte Rotornulllage 32 ermittelt werden. Hierfür ist in dem zweiten Speicher 8 der Hinterradlenkungseinheit 3 eine Rotornulllage 32 abgespeichert (vgl. Figur 1). Die Rotornulllage 32 bestimmt die Lage des Rotors des Hinterradaktuators 4 innerhalb einer vollen Umdrehung von 360°.

Gemäß Figur 6 wird somit zunächst im Rahmen der Grobinitialisierung als zweites Abgleichergebnis 25 der Offsetkorrekturwert 28 geliefert, der den Sensor 5 bis auf eine Umdrehung des Rotors des Hinterradaktuators 4 reinitialisieren kann. Anschließend verwendet das Steuergerät 6, 14 die im ROM bei der Herstellung und/oder Montage der Hinterradlenkungseinheit 3 abgespeicherte Rotornulllage 32, um den Rotor exakt innerhalb des Sensorerfassungsbereiches von 360° zu justieren. Bei der Herstellung wird hiermit die Spur an der Hinterachse eingestellt, so dass die Lenkwinkel der Räder an der Hinterachse eine Geradeausfahrt ermöglichen.

Figur 7 zeigt schematisch ein Fahrzeug 70, welches sich auf einer Fahrbahn zwischen Fahrbahnbegrenzungen 60, 62 befindet und sich in einer Frontfahrtrichtung F bewegt. Das Fahrzeug weist eine Vorderachse 45 sowie eine Hinterachse 55 auf. Sowohl die Vorderachse als auch die Hinterachse sind mit einer Lenkeinrichtung versehen. An der Vorderachse 45 ist schematisch eine Vorderradlenkungseinheit 48 dargestellt, bei der ein Aktuator mittels Lenkstangen eine Lenkbewegung auf die Räder 40 L, 40 R übertragen kann. Der Lenkwinkel der Vorderräder 40 L, 40 R beträgt im vorliegenden Ausführungsbeispiel 0 Grad. An der Hinterachse 55 ist eine Hinterradlenkungseinheit 3 angeordnet, die mittels des Hinterradaktuators 4 eine Lenkbewegung mittels Lenkstangen auf die Hinterräder 50 L, 50 R übertragen kann. Der Hinterradlenkungseinheit 3 ist ein Hinterradsteuergerät 6 zugeordnet, welches z. B. über ein CAN-Bus Signal signaltechnisch mit der Vorderradlenkungseinheit 48 gekoppelt ist. Auf diese Weise können in die Berechnung des Hinterradlenkwinkels die an den Vorderrädern eingestellten Lenkwinkel einbezogen werden und umgekehrt. Der Hinterradaktuator 4 weist lediglich einen direkt zugeordneten oder in dem Hinterradaktuator 4 befindlichen Sensor 5 in Form eines Rotorlagesensor auf. Der zur Plausibilisierung bzw. Reinitialisierung verwendete Sensor bzw. die diesen Sensor enthaltende Referenzsensorik ist in einer zweiten Fahrzeugeinheit 10 untergebracht, welche deren Referenzsignale 16 aufnehmen bzw. speichern kann. In dem vorliegenden Ausführungsbeispiel weist das Fahrzeug 70 seitlich jeweils vorne, mittig und hinten Umfeldsensoren 12a bis f auf, welche als optische Sensoren ausgebildet sind.

Es kann sich hierbei um Kameras und/oder Radar und/oder Lidarsensoren oder ähnliche Einheiten handeln. Beispielhaft ist dargestellt, dass der am linken Vorderwagen angeordnete Sensor 12a einen Abstand des Vorderwagens a zur linken Fahrbahnbegrenzung 60 erfasst. Zeitgleich erfassen der mittig angeordnete Sensor 12 c den Abstand der Fahrzeugmitte zur Fahrbahnbegrenzung und der am hinteren linken Ende des Fahrzeugs 70 angeordnete Sensor 12e den Abstand b des Hinterwagens zur Fahrbahnbegrenzung 60. Die zweite Fahrzeugeinheit 10 wertet die Signale der Sensoren 12a bis f aus. Die Sensoren 12a, c, e geben somit in Echtzeit Auskunft über den Abstand des Fahrzeugs 70 zur linken Fahrbahnbegrenzung 60. Die Sensoren 12 b, d, f geben zeitgleich Auskunft über den Abstand des Fahrzeugs 70 zur rechten Fahrbahnbegrenzung 62. Die der zweiten Fahrzeugeinheit 10 zugeordnete Referenzsensorik 12 (a bis f) gibt somit permanent Auskunft darüber, in welcher Position das Fahrzeug 70 sich zu den Fahrbahnbegrenzungen befindet. Bei einer Bestimmung in zeitlichen Intervallen kann neben dem aktuellen Abstand auch die Fahrtrichtung sowie die Geschwindigkeit bestimmt werden. Im Zusammenhang mit ebenfalls der zweiten Fahrzeugeinheit zugeordneten Sensoren wie Geschwindigkeitssensoren und Beschleunigungssensoren kann im vorliegenden Beispiel das Hinterradsteuergerät 6 die aktuelle Bewegung des Fahrzeugs im Verhältnis zur Fahrbahn erkennen. Im vorliegenden Beispiel der Figur 7 liegt an der Hinterachse ein Ist-Hinterradlenkwinkel 30 an. Da der Ist-Vorderradlenkwinkel gleich null ist, nähert sich das Fahrzeug 70 der linken Fahrbahnbegrenzung 60 in einer leichten Kurvenbahn. Das Hinterradsteuergerät 6 erkennt somit anhand der Signale der Referenzsensorik 12, insbesondere im Zusammenhang mit dem mathematischen Modell 9, welches auf dem Hinterradsteuergerät 6 ausgeführt wird, dass das Fahrzeug 70 nicht geradeaus fährt und kann somit einen Offsetkorrekturwert und auch den tatsächlichen Ist-Hinterradlenkwinkel 30 bestimmen, der an der Hinterachse 55 bzw. den Hinterrädern 50l, 50r anliegt. Damit ist dem Hinterradsteuergerät 6 eine Plausibilisierung und Reinitialisierung des Sensors 5 der Hinterradlenkungseinheit 3 möglich.

Figur 8 zeigt ebenfalls ein Fahrzeug 70 in einer ähnlichen Fahrsituation wie in Figur 7. Gleiche Bezugszeichen mit gleicher Bedeutung werden hier nicht nochmals erläutert. Im Unterschied zu Figur 7 liegt sowohl an der Hinterachse 55 als auch an der Vorderachse 45 ein Lenkwinkel 30, 21 an. Im vorliegenden Fall sind die Lenkwinkel 21, 30 an der Vorder- und an der Hinterachse 45, 55 derart, dass die Räder parallel zueinander stehen. Dadurch ergibt sich für das Fahrzeug 70 ein Krebsgang, d. h., dass sich das Fahrzeug im Schräglauf mit einem Schräglaufwinkel 65 in Relation zur Fahrbahnbegrenzung 60 befindet. Mit anderen Worten fährt das Fahrzeug in gewisser Weise geradeaus und bewegt sich parallel zur Fahrbahnbegrenzung. Allerdings verläuft die Fahrzeuglängsachse zur Fahrbahnrichtung bzw. -begrenzung nicht parallel. Es ist ersichtlich, dass bei dieser Vorwärtsbewegung des Fahrzeugs 70 der von den Sensoren 12a am Vorderwagen sowie der durch den Sensor 12e erfasste Abstand des Hinterwagens b zur Fahrbahnbegrenzung 60 konstant bleibt. Das Hinterradsteuergerät 6 erkennt im Zusammenhang mit dem darauf ausgeführten Fahrzeugmodell 9 diesen Krebsgang und kann so anhand des ermittelten Winkels 65 und der Ist-Lenkwinkel an Vorder- und Hinterachse 21, 30 bestimmen, ob die erfassten Winkel mit der Fahrzeugbewegung übereinstimmen. Es kann somit bestimmt werden, ob der erfasste Ist-Hinterradlenkwinkel 30 als auch der erfasste Ist-Vorderradlenkwinkel mit den Referenz-Vorderrad-/Hinterradlenkwinkeln übereinstimmen, oder ob der Sensor 5 der Hinterradlenkungseinheit 3 zu reinitialisieren ist. Falls eine Reinitialisierung notwendig ist, wird der Offsetkorrekturwert gespeichert und eine Reinitialisierung anhand dessen vorgenommen.

Bei den vorstehenden Ausführungsbeispielen wurden für Merkmale, die im Vergleich zu den jeweils vorstehenden Ausführungsbeispielen in ihrer Ausgestaltung und/oder Wirkweise identisch oder zumindest vergleichbar sind, gleiche Bezugszeichen verwendet. Sofern diese nicht nochmals detailliert erläutert wurden, entspricht deren Ausgestaltung und/oder Wirkweise der Ausgestaltung und/oder Wirkweise der jeweils vorstehend bereits beschriebenen Merkmale. Infolgedessen ist insbesondere die Arbeitsweise des mathematischen Modells 9 zur Ermittlung des Referenzwerts 17 und/oder Referenzfahrzeugzustands 18 bei den vorstehenden Ausführungsbeispielen gleich. Selbiges trifft auf die Verfahrensschritte des Steuergeräts 6, 14 zu, um eines der beiden Abgleichergebnisse 24, 25 zu ermitteln.

### Bezugszeichen

- 1.: Anordnung
- 2.: erste Fahrzeugeinheit
- 3.: Hinterradlenkungseinheit
- 4.: Hinterradaktuator
- 5.: Sensor
- 6.: Hinterradsteuergerät
- 7.: ersten Speicher
- 8.: zweiten Speicher
- 9.: mathematisches Modell
- 10.: zweite Fahrzeugeinheit
- 11.: Fahrstabilitätseinheit
- 12.: Referenzsensorik
- 12.a-f: Sensoren der Referenzsensorik
- 13.: Ist-Sensor
- 14.: Fremdsteuergerät
- 16.: Referenzsignal
- 17.: Referenzwert
- 18.: Referenzfahrzeugzustand
- 19.: Geradeausfahrt des Fahrzeugs
- 20.: Ist-Wert
- 21.: Ist-Vorderradlenkwinkel
- 22.: Vorderrad-Lenkwinkelsensor
- 23.: Ergebniswert
- 24.: erstes Abgleichergebnis
- 25.: zweites Abgleichergebnis
- 26.: Referenz-Vorderradlenkwinkel
- 27.: Differenz
- 28.: Offsetkorrekturwert
- 29.: Referenz-Hinterradlenkwinkel
- 30.: Ist-Hinterradlenkwinkel
- 31.: Hinterrad-Lenkwinkelsensor
- 32.: Rotornulllage
- 33.: Feininitialisierung
- 40l.: Vorderrad
- 40r.: Vorderrad
- 45.: Vorderachse
- 48.: Vorderradlenkungseinheit
- 50l.: Hinterrad
- 50r.: Hinterrad
- 55.: Hinterachse
- 60.: Fahrbahnbegrenzung
- 62.: Fahrbahnbegrenzung
- 65.: Winkel
- 70.: Fahrzeug
- a.: Abstand Vorderwagen
- b.: Abstand Hinterwagen

## Patentansprüche

1. Anordnung (1) zur Plausibilisierung und/oder Reinitialisierung einer Hinterradlenkung eines Fahrzeugs mit einer Hinterradlenkungseinheit (3), die zumindest einen Hinterradaktuator (4) zum Einstellen eines Hinterradlenkwinkels und einen Sensor (5) zum Erfassen der Stellposition des Hinterradaktuators (4) in Form eines Rotorlagensensors (5) aufweist, mit zumindest einer Referenzsensorik (12) zum Erfassen eines Referenzsignals und mit einem elektronischen Steuergerät (6, 14) zum Durchführen der Plausibilisierung und/oder Reinitialisierung des Sensors (5), **dadurch gekennzeichnet, dass** die Referenzsensorik (12) Bestandteil einer im Vergleich zur Hinterradlenkungseinheit (3) anderen Fahrzeugeinheit (10) ist und zum Erfassen eines vom Zustand des Fahrzeugs abhängigen Referenzsignals (16) ausgebildet ist und dass mittels des Steuergeräts (6, 14) anhand des vom Zustand des Fahrzeugs abhängigen Referenzsignals (16) ein Referenzwert (17) und/oder ein Referenzfahrzeugzustand (18) bestimmbar ist, mittels dessen vom Steuergerät (6, 14) die Plausibilisierung und/oder Reinitialisierung des Sensors (5) der Hinterradlenkung durchführbar ist.

2. Anordnung nach dem vorherigen Anspruch 1, **dadurch gekennzeichnet, dass** der Referenzwert (17) und/oder Referenzfahrzeugzustand (18) mittels eines mathematischen Modells (9) durch das Steuergerät (6, 14) schätzbar und/oder berechenbar ist.

3. Anordnung nach einem der vorherigen Ansprüche, **dadurch gekennzeichnet, dass** die Referenzsensorik (12) aus zumindest einem optischen oder Magnetfelder detektierenden Sensor besteht, welche bevorzugt als Radar-, Lidar- oder Kamerasensor ausgebildet sind.

4. Anordnung nach einem der vorherigen Ansprüche 1 bis 3, **dadurch gekennzeichnet, dass** die Referenzsensorik (12) Bestandteil einer Fahrstabilitätseinheit, insbesondere eines ESP-Systems, oder eines Fahrerassistenzsystems ist.

5. Anordnung nach einem der vorherigen Ansprüche, **dadurch gekennzeichnet, dass** das Steuergerät, auf dem sich ein mathematische Modell (9) befindet, ein Hinterradsteuergerät (6) der Hinterradlenkungseinheit (3) und/oder ein Fremdsteuergerät (14), insbesondere der Fahrstabilitätseinheit (11), ist.

6. Anordnung nach einem der vorherigen Ansprüche, **dadurch gekennzeichnet, dass** mit einem mathematischen Modell (9) für die Plausibilisierung als Referenzwert (17) ein Referenz-Vorderradlenkwinkel (26) und/oder für die Reinitialisierung als Referenzwert (17) ein Referenz-Hinterradlenkwinkel (29) bestimmbar ist.

7. Anordnung nach einem der vorherigen Ansprüche, **dadurch gekennzeichnet, dass** mit einem mathematischen Modell (9) für die Plausibilisierung und/oder Reinitialisierung als Referenzfahrzeugzustand (18) eine Geradeausfahrt des Fahrzeugs (19) bestimmbar ist.

8. Anordnung nach einem der vorherigen Ansprüche, **dadurch gekennzeichnet, dass** die Anordnung (1) einen Ist-Sensor (13) zum Erfassen eines Ist-Wertes (20) umfasst, wobei für die Plausibilisierung und/oder Reinitialisierung vorzugsweise ein Ist-Vorderradlenkwinkel (21) und/oder ein Ist-Hinterradlenkwinkel (30) erfassbar sind.

9. Anordnung nach dem vorherigen Anspruch 8, **dadurch gekennzeichnet, dass** vom Steuergerät (6, 14) zur Plausibilisierung und/oder Reinitialisierung der von einem mathematischen Modell (9) bestimmbare Referenzwert (17) und/oder Referenzfahrzeugzustand (18) mit dem vom Ist-Sensor (13) erfassbaren Ist-Wert (20) abgleichbar und hierdurch ein Ergebniswert (23) und/oder Abgleichergebnis (24, 25) bereitstellbar ist.

10. Anordnung nach dem vorherigen Anspruch 9, **dadurch gekennzeichnet, dass** mit dem Steuergerät (6, 14) für die Plausibilisierung bei als Referenzfahrzeugzustand (18) festgestellter Geradeausfahrt (19) überprüfbar ist, ob der Ist-Vorderradlenkwinkel den Ergebniswert (23) Null aufweist.

11. Anordnung nach dem vorherigen Anspruch 9, **dadurch gekennzeichnet, dass** mit dem Steuergerät (6, 14) für die Plausibilisierung überprüfbar ist, ob der Ist-Vorderradlenkwinkel (21) vom Referenz-Vorderradlenkwinkel (26) abweicht oder ein Ergebniswert (23) von Null vorliegt.

12. Anordnung nach einem der vorherigen Ansprüche 9 bis 11, **dadurch gekennzeichnet, dass** mit dem Steuergerät (6, 14) für die Plausibilisierung bei einem Ergebniswert (23) gleich Null als Abgleichergebnis (24, 25) kein Fehler des Sensors (5) und bei einem Ergebniswert (23) ungleich Null ein Fehler des Sensors (5) feststellbar ist.

13. Anordnung nach dem vorherigen Anspruch 9, **dadurch gekennzeichnet, dass** mit dem Steuergerät (6, 14) für die Reinitialisierung bei als Referenzfahrzeugzustand (18) festgestellter Geradeausfahrt (19) überprüfbar ist, ob der Ist-Vorderradlenkwinkel (21) den Ergebniswert (23) Null aufweist.

14. Anordnung nach dem vorherigen Anspruch 9, **dadurch gekennzeichnet, dass** mit dem Steuergerät (6, 14) für die Reinitialisierung überprüfbar ist, ob der Referenz-Hinterradlenkwinkel (29) vom Ist-Hinterradlenkwinkel (30) abweicht oder ein Ergebniswert (23) von Null vorliegt.

15. Anordnung nach einem der vorherigen Ansprüche 9, 13 oder 14, **dadurch gekennzeichnet, dass** mit dem Steuergerät (6, 14) für die Reinitialisierung bei einem Ergebniswert (23) gleich Null als Abgleichergebnis (24, 25) ein reinitialisierter Sensor (5) und bei einer als Ergebniswert (23) festgestellten Differenz (27) ein nicht initialisierter Sensor (5) feststellbar ist.

16. Anordnung nach dem vorherigen Anspruch 15, **dadurch gekennzeichnet, dass** von dem Steuergerät (6, 14) zur Reinitialisierung des Sensors (5) die festgestellte Differenz (27) als Offsetkorrekturwert (28) für den Sensor (5) in einem ersten Speicher (7), insbesondere einem RAM, speicherbar und/oder verwendbar ist.

17. Verfahren zur Plausibilisierung und/oder Reinitialisierung einer Hinterradlenkung eines Fahrzeugs, **dadurch gekennzeichnet, dass** das Verfahren mit einer Anordnung (1) gemäß einem oder mehreren der vorherigen Ansprüche durchgeführt wird, mit den Schritten Erfassen einer Stellposition eines Hinterradaktuators mittels eines Sensors (5) in Form eines Rotorlagensensors (5), Erfassen eines vom Zustand des Fahrzeugs abhängigen Referenzsignals (16) mittels eines Referenzsensors (12), Bestimmen eines Referenzwertes (17) und/oder eines Referenzfahrzeugzustands (18), wobei ein Steuergerät (6, 14) die Plausibilisierung und/oder Reinitialisierung durchführt.

## Claims

1. Assembly (1) for plausibility checking and/or reinitializing rear wheel steering of a vehicle, having a rear-wheel steering unit (3), which has at least one rear wheel actuator (4) for setting a rear-wheel steering angle and a sensor (5) for detecting the setting position of the rear wheel actuator (4) in the form of a rotor position sensor (5), having at least one reference sensor system (12) for detecting a reference signal and having an electronic control unit (6, 14) for carrying out the plausibility checking and/or reinitialization of the sensor (5), **characterized in that** the reference sensor system (12) is part of a vehicle unit (10) other than the rear wheel steering unit (3) and is designed for detecting a reference signal (16) dependent on the state of the vehicle and **in that**, by means of the control unit (6, 14) and on the basis of the reference signal (16) dependent on the state of the vehicle, a reference value (17) and/or a reference vehicle state (18) can be determined, by means of which the plausibility checking and/or reinitialization of the sensor (5) of the rear wheel steering can be carried out by the control unit (6, 14).

2. Assembly according to the preceding Claim 1, **characterized in that** the reference value (17) and/or reference vehicle state (18) can be estimated and/or can be calculated by the control unit (6, 14) by means of a mathematical model (9).

3. Assembly according to one of the preceding claims, **characterized in that** the reference sensor system (12) consists of at least one optical or magnetic-field detecting sensor, which is preferably formed as a radar, lidar or camera sensor.

4. Assembly according to one of the preceding Claims 1 to 3, **characterized in that** the reference sensor system (12) is part of a driving stability unit, in particular an ESP system, or a driver assistance system.

5. Assembly according to one of the preceding claims, **characterized in that** the control unit on which a mathematical model (9) is located is a rear-wheel control unit (6) of the rear wheel steering unit (3) and/or an external control unit (14), in particular of the driving stability unit (11).

6. Assembly according to one of the preceding claims, **characterized in that**, with a mathematical model (9), a reference front-wheel steering angle (26) can be determined as the reference value (17) for the plausibility checking and/or a reference rear-wheel steering angle (29) can be determined as the reference value (17) for the reinitialization.

7. Assembly according to one of the preceding claims, **characterized in that**, with a mathematical model (9), driving straight ahead of the vehicle (19) can be determined as the reference vehicle state (18) for the plausibility checking and/or reinitialization.

8. Assembly according to one of the preceding claims, **characterized in that** the assembly (1) comprises an actual-value sensor (13) for detecting an actual value (20), wherein preferably an actual front-wheel steering angle (21) and/or an actual rear-wheel steering angle (30) can be detected for the plausibility checking and/or reinitialization.

9. Assembly according to the preceding Claim 8, **characterized in that**, for the plausibility checking and/or reinitialization, the reference value (17) and/or reference vehicle state (18) that can be determined from a mathematical model (9) can be compared by the control unit (6, 14) with the actual value (20) that can be detected by the actual-value sensor (13) and thereby a result value (23) and/or comparison result (24, 25) can be provided.

10. Assembly according to the preceding Claim 9, **characterized in that**, with the control unit (6, 14), when driving straight ahead (19) has been established as the reference vehicle state (18), it can be checked for the plausibility checking whether the actual front-wheel steering angle has the result value (23) of zero.

11. Assembly according to the preceding Claim 9, **characterized in that**, with the control unit (6, 14), it can be checked for the plausibility checking whether the actual front-wheel steering angle (21) deviates from the reference front-wheel steering angle (26) or there is a result value (23) of zero.

12. Assembly according to one of the preceding Claims 9 to 11, **characterized in that**, with the control unit (6, 14), it can be established for the plausibility checking that the sensor (5) is not faulty when there is a result value (23) equal to zero as the comparison result (24, 25) and that the sensor (5) is faulty when there is a result value (23) unequal to zero.

13. Assembly according to the preceding Claim 9, **characterized in that**, with the control unit (6, 14), when driving straight ahead (19) has been established as the reference vehicle state (18), it can be checked for the reinitialization whether the actual front-wheel steering angle (21) has the result value (23) of zero.

14. Assembly according to the preceding Claim 9, **characterized in that**, with the control unit (6, 14), it can be checked for the reinitialization whether the reference rear-wheel steering angle (29) deviates from the actual rear-wheel steering angle (30) or there is a result value (23) of zero.

15. Assembly according to one of the preceding Claims 9, 13 or 14, **characterized in that**, with the control unit (6, 14), it can be established for the reinitialization that the sensor (5) is reinitialized when there is a result value (23) equal to zero as the comparison result (24, 25) and that the sensor (5) is not reinitialized when there is an established difference (27) as the result value (23).

16. Assembly according to the preceding Claim 15, **characterized in that** the established difference (27) can be stored as an offset correction value (28) for the sensor (5) in a first memory (7), in particular a RAM, and/or can be used as such by the control unit (6, 14) for the reinitialization of the sensor (5).

17. Method for plausibility checking and/or reinitializing rear wheel steering of a vehicle, **characterized in that** the method is carried out with an assembly (1) according to one or more of the preceding claims, having the steps of detecting a setting position of a rear wheel actuator by means of a sensor (5) in the form of a rotor position sensor (5), detecting a reference signal (16) dependent on the state of the vehicle by means of a reference sensor (12), determining a reference value (17) and/or a reference vehicle state (18), wherein a control unit (6, 14) carries out the plausibility checking and/or reinitialization.

## Revendications

1. Agencement (1) de plausibilisation et/ou de réinitialisation d'une direction de roue arrière d'un véhicule pourvu d'une unité de direction de roue arrière (3), qui présente au moins un actionneur de roue arrière (4) servant à régler un angle de direction de roue arrière et un capteur (5) servant à détecter la position de réglage de l'actionneur de roue arrière (4) sous la forme d'un capteur de position de rotor (5), comprenant au moins un système de capteurs de référence (12) pour détecter un signal de référence et un appareil de commande électronique (6, 14) pour effectuer la plausibilisation et/ou la réinitialisation du capteur (5),
**caractérisé en ce que** le système de capteurs de référence (12) fait partie d'une unité de véhicule (10) différente en comparaison avec l'unité de direction de roue arrière (3), et est réalisé pour détecter un signal de référence (16) dépendant de l'état du véhicule, et **en ce que** l'appareil de commande (6, 14), permet de déterminer à l'aide du signal de référence (16) dépendant de l'état du véhicule une valeur de référence (17) et/ou un état de véhicule de référence (18) au moyen desquels l'appareil de commande (6, 14) peut effectuer la plausibilisation et/ou la réinitialisation du capteur (5) de la direction de roue arrière.

2. Agencement selon la revendication précédente 1, **caractérisé en ce que** la valeur de référence (17) et/ou l'état de véhicule de référence (18) peuvent être estimés et/ou calculés par l'appareil de commande (6, 14) au moyen d'un modèle mathématique (9).

3. Agencement selon l'une quelconque des revendications précédentes, **caractérisé en ce que** le système de capteurs de référence (12) est composé d'au moins un capteur optique ou détectant des champs magnétiques qui est de préférence réalisé sous forme de capteur radar, capteur lidar ou capteur de caméra.

4. Agencement selon l'une quelconque des revendications précédentes 1 à 3, **caractérisé en ce que** le système de capteurs de référence (12) fait partie d'une unité de stabilité de conduite, en particulier d'un système ESP ou d'un système d'assistance au conducteur.

5. Agencement selon l'une quelconque des revendications précédentes, **caractérisé en ce que** l'appareil de commande sur lequel se trouve un modèle mathématique (9) est un appareil de commande de roue arrière (6) de l'unité de direction de roue arrière (3) et/ou un appareil de commande externe (14), en particulier une unité de stabilité de conduite (11).

6. Agencement selon l'une quelconque des revendications précédentes, **caractérisé en ce qu'**un modèle mathématique (9) permet de déterminer pour la plausibilisation un angle de direction de roue avant de référence (26) comme valeur de référence (17), et/ou permet de déterminer pour la réinitialisation un angle de direction de roue arrière de référence (29) comme valeur de référence (17).

7. Agencement selon l'une quelconque des revendications précédentes, **caractérisé en ce qu'**un modèle mathématique (9) permet de déterminer pour la plausibilisation et/ou la réinitialisation une marche en ligne droite du véhicule (19) comme état de véhicule de référence (18).

8. Agencement selon l'une quelconque des revendications précédentes, **caractérisé en ce que** l'agencement (1) comprend un capteur réel (13) pour détecter une valeur réelle (20), de préférence un angle de direction de roue avant réel (21) et/ou un angle de direction de roue arrière réel (30) pouvant être détectés pour la plausibilisation et/ou la réinitialisation.

9. Agencement selon la revendication précédente 8, **caractérisé en ce que** l'appareil de commande (6, 14) permet de recouper pour la plausibilisation et/ou la réinitialisation la valeur de référence (17) et/ou l'état de véhicule de référence (18) pouvant être déterminés par un modèle mathématique (9) avec la valeur réelle (20) pouvant être détectée par le capteur réel (13) et permet ainsi de fournir une valeur de résultat (23) et/ou un résultat de recoupement (24, 25).

10. Agencement selon la revendication précédente 9, **caractérisé en ce que** l'appareil de commande (6, 14), si la marche en ligne droite (19) est constatée comme état de véhicule de référence (18), permet de vérifier pour la plausibilisation si l'angle de direction de roue avant réel présente la valeur de résultat (23) de zéro.

11. Agencement selon la revendication précédente 9, **caractérisé en ce que** l'appareil de commande (6, 14) permet de vérifier pour la plausibilisation si l'angle de direction de roue avant réel (21) dévie par rapport à l'angle de direction de roue avant de référence (26) ou si une valeur de résultat (23) de zéro est donnée.

12. Agencement selon l'une quelconque des revendications précédentes 9 à 11, **caractérisé en ce que** l'appareil de commande (6, 14) ne permet de constater pour la plausibilisation aucune erreur du capteur (5) pour une valeur de résultat (23) égale à zéro comme résultat de recoupement (24, 25), et permet de constater une erreur du capteur (5) pour une valeur de résultat (23) différente de zéro.

13. Agencement selon la revendication précédente 9, **caractérisé en ce que** l'appareil de commande (6, 14), si une marche en ligne droite (19) est constatée comme état de véhicule de référence (18), permet de vérifier si l'angle de direction de roue avant réel (21) présente la valeur de résultat (23) de zéro.

14. Agencement selon la revendication précédente 9, **caractérisé en ce que** l'appareil de commande (6, 14) permet de vérifier pour la réinitialisation si l'angle de direction de roue arrière de référence (29) dévie par rapport à l'angle de direction de roue arrière réel (30) ou si une valeur de résultat (23) de zéro est donnée.

15. Agencement selon l'une quelconque des revendications précédentes 9, 13 ou 14, **caractérisé en ce que** l'appareil de commande (6, 14) permet de constater pour la réinitialisation un capteur réinitialisé (5) dans le cas d'une valeur de résultat (23) égale à zéro comme résultat de recoupement (24, 25), et permet de constater un capteur non initialisé (5) dans le cas d'une différence (27) constatée comme valeur de résultat (23).

16. Agencement selon la revendication précédente 15, **caractérisé en ce que** l'appareil de commande (6, 14) permet de mémoriser et/ou d'utiliser pour la réinitialisation du capteur (5) la différence constatée (27) comme une valeur de correction de décalage (28) pour le capteur (5) dans une première mémoire (7), en particulier une RAM.

17. Procédé de plausibilisation et/ou de réinitialisation d'une direction de roue arrière d'un véhicule, **caractérisé en ce que** le procédé est effectué avec un agencement (1) selon une ou plusieurs des revendications précédentes, comprenant les étapes consistant à détecter une position de réglage d'un actionneur de roue arrière au moyen d'un capteur (5) sous la forme d'un capteur de position de rotor (5), détecter un signal de référence (16) dépendant de l'état du véhicule au moyen d'un capteur de référence (12), déterminer une valeur de référence (17) et/ou un état de véhicule de référence (18), un appareil de commande (6, 14) effectuant la plausibilisation et/ou la réinitialisation.
